# EUROPÄISCHE PATENTSCHRIFT

(11) **EP 0 459 299 B1**
(45) Veröffentlichungstag und Bekanntmachung des Hinweises auf die Patenterteilung: **11.10.1995**
(21) Anmeldenummer: 91108351.7
(22) Anmeldetag: 23.05.1991
(51) Int. Cl.: H02B 11/127

(54) **Trennkontaktanordnung für ein- und ausfahrbare Leistungsschalter in Schaltanlagen**
Disconnecting arrangement for an extensible and retractable power circuit breaker in switchgear apparatus
Dispositif de sectionnement pour un disjoncteur de puissance extensible et rétractable dans une installation de commutation

(30) Priorität: 24.05.1990 DE 4016705
(43) Veröffentlichungstag der Anmeldung: 04.12.1991
(73) Patentinhaber: Klöckner-Moeller GmbH, 53115 Bonn (DE)
(72) Erfinder: Buchbender, Guido, W-5300 Bonn 1 (DE); Mader, Hans-Jürgen, W-5400 Koblenz (DE); Nitsche, Norbert, W-5205 St. Augustin 3 (DE); Schlaweck, Karlheinz, W-5300 Bonn 3 (DE); Zimmermann, Burkhard, W-4630 Bochum 1 (DE); Richardt, Peter, W-5047 Wesseling (DE); Wittkop, Jochen, W-5205 St. Augustin 1 (DE); Schmitz, Klaus, W-5060 Berg.-Gladbach 1 (DE)

(56) Entgegenhaltungen:
- EP-A- 0 253 170
- US-A- 2 777 024
- US-A- 3 188 415
- US-A- 3 343 042

## Beschreibung

Die Erfindung betrifft eine Trennkontaktanordnung für ein- und ausfahrbare Leistungsschalter in Schaltanlagen nach dem Oberbegriff des Anspruches 1.

Bei einer aus der DE-OS 36 21 748 (entspricht der EP-A-0 253 170) bekannten Trennkontaktanordnung für einschiebbare Leistungsschalter in Schaltanlagen sind im festen Anlagenteil und am Leistungsschalter Anschlußfahnen vorhanden, wobei zur Herstellung der elektrisch leitenden Verbindung der festen Anschlußfahnen mit den am Leistungsschalter angeordneten Anschlußfahnen ein Kontaktrahmen mit Kontaktbrücken dient, der über einen Antrieb mittels einer Drehspindelanordnung oder dergleichen in vorbestimmte Kontaktstellungen zwischen AUS und EIN gebracht wird.

Bei dieser bekannten Trennkontaktanordnung entsteht durch das Verschieben der Kontaktbrücken auf den Anschlußfahnen metallischer Abrieb, wodurch die Funktionsfähigkeit der Trennkontaktanordnung im Laufe der Zeit beeinträchtigt wird.

Der Erfindung liegt die Aufgabe zugrunde, diese Schwierigkeiten zu vermeiden und eine Trennkontaktanordnung für ein- und ausfahrbare Leistungsschalter in Schaltanlagen nach dem Oberbegriff des Anspruches 1 so auszubilden, daß die Kontaktgabe und die Kontakttrennung beim Ein- und Ausfahren des Leistungsschalters ohne metallischen Abrieb an den zusammenarbeitenden Kontaktteilen gewährleistet ist.

Diese Aufgabe wird gemäß der Erfindung bei einer gattungsgemäßen Trennkontaktanordnung durch den Kennzeichnungsteil des Anspruches 1 gelöst, während in den Ansprüchen 2 bis 14 besonders vorteilhafte Weiterbildungen der Erfindung gekennzeichnet sind.

Durch die Erfindung ergibt sich der Vorteil, daß die Kontaktbrücken weder für die Herstellung noch für die Unterbrechung des Kontaktes zwischen den Kontaktelementen am Leistungsschalter und an den Stromschienen im festen Anlagenteil verschoben werden müssen. Die Kontaktbrücken verbleiben vielmehr stets in ihrer ortsfesten Stellung an den Kontaktelementen vorzugsweise im festen Anlagenteil und werden durch die erfindungsgemäß vorgesehenen Trennelemente aus isolierendem Kunststoff entgegen Federdruck so weit auseinandergedrückt, daß die Kontaktelemente des Leistungsschalters beim Einschub ohne jede Berührung mit den Kontaktenden der Kontaktbrücken in ihre Einschubstellung gelangen, in der sie erst nach einer entsprechenden axialen Verlagerung der Trennelemente für einen elektrischen Kontakt mit den Kontaktbrücken freigegeben werden, wobei die vorher auseinandergehaltenen Enden der zweckmäßig als Tulpenkontakte ausgebildeten Kontaktbrücken sich von außen radial an den Umfang der Kontaktelemente anlegen, ohne daß zwischen diesen und den Kontaktbrücken ein metallischer Abrieb entsteht.

Die Trennelemente sind vorteilhafterweise Teile einer am festen Anlagenteil verschiebbar angeordneten Trennplatte, die den Raum zwischen Stromschienen und Leistungsschalter vollständig abdeckt. Außerdem können die Trennelemente an dem den Kontaktbrücken oder Tulpenkontakten zugewandten Ende derart abgeschrägt sein, daß sie beim Verschieben in Richtung der Kontaktbrücken oder Tulpenkontakte deren Kontaktstücke auseinanderdrücken und sich damit ohne metallischen Abrieb zwischen diese und die Kontaktelemente des Leistungsschalters schieben.

Für einen sicheren Betrieb der Trennkontaktanordnung und eine sichere Handhabung ist es weiterhin besonders vorteilhaft, daß eine Verriegelungsvorrichtung einerseits für eine Festlegung des Leistungsschalters am festen Anlagenteil und andererseits für eine Sicherung der Trennplatte mit Trennelementen in unterschiedlichen Abständen zwischen festem Anlagenteil und eingeschobenem Leistungsschalter vorgesehen ist. Die Verriegelungsvorrichtung für den Leistungsschalter besteht aus einem von der Rückseite oder der Tragplatte des Leistungsschalters hervorstehenden Haltebügel mit einer Eingriffsöffnung für einen am festen Anlagenteil schwenkbaren Haltehaken, der ebenso wie ein die Trennplatte in den Stellungen AUS, TEST und EIN sichernder Sperrhebel von der Außenseite der Trennplatte und außerhalb des Leistungsschalters her betätigbar ist.

Die Verriegelungsvorrichtung weist an einer schlitzförmigen Öffnung an der Trennplatte einen Quersteg für den Eingriff des Sperrhebels auf, und der Sperrhebel besitzt eine fensterartige Längsöffnung mit vorzugsweise drei davon etwa parallel zur Ebene der Trennplatte zur Seite gerichteten Rastschlitzen, die in Längsrichtung des Sperrhebels in einem solchen gegenseitigen Abstand nebeneinander angeordnet sind, daß der Sperrhebel den Quersteg an der Trennplatte jeweils in den Stellungen AUS, TEST und EIN mit einem der parallelen Rastschlitze sperrend übergreift und bei jeder Verstellung der Trennplatte den Quersteg in der die Rastschlitze verbindenden Längsöffnung frei entlanggleiten läßt.

Außerdem greift der Sperrhebel in jeder seiner Sperrstellungen mit einem außenliegenden Raststeg in eine Innenverzahnung an einem ihn umgebenden Zahnkranz sperrend ein, der an der Trennplatte drehbar gelagert ist und mit ebenfalls an der Trennplatte drehbar angeordneten Zahnrädern kämmt, die nach Art von Planetenrädern an seinem Umfang angreifen und mit Innengewindegängen auf feststehenden Gewindebolzen derart drehbar angeordnet sind, daß sie bei einem gemeinsamen synchronen Antrieb durch ein Zahnradgetriebe oder einen Zahnriementrieb eine parallele Hin- und Herverstellung der Trennplatte zwischen den Stellungen AUS, TEST und EIN bewirken.

Zum leichteren Einschub des Leistungsschalters und eine genaue Ausrichtung der Trennkontaktanordnung ist es weiterhin von Vorteil, wenn mindestens ein Teil der mit dem zentralen Zahnkranz kämmenden Zahnräder an der dem Leistungsschalter zugewandten Stirnseite einen den zugehörigen anlagenfesten Gewindebolzen mit radialem Abstand umgebenden ringförmigen Kragen aufweist für einen Eingriff von an der Tragplatte des Leistungsschalters jeweils paarweise nebeneinander angeordneten Klemmbacken, die durch Spreizfedern auseinandergehalten sind und gegen die Trennplatte so weit hervorstehen, daß sie in der Einschubstellung des Leistungsschalters von dem Kragen der zugehörigen Zahnräder in Klemmeingriff am freien Ende des Gewindebolzens zusammengedrückt werden.

Bevorzugte Ausführungsbeispiele der Erfindung sind in der Zeichnung schematisch dargestellt. Es zeigen
- Fig. 1: einen senkrechten Längsschnitt durch eine Trennkontaktanordnung zwischen einem festen Anlagenteil und einem Leistungsschalter in der AUS-Stellung,
- Fig. 2: eine gegenüber Fig. 1 vergrößerte Teildarstellung der Trennkontaktanordnung bei eingeschobenem Leistungsschalter mit Trennplatte und zugehöriger Verriegelungsvorrichtung in der AUS-Stellung,
- Fig. 3: eine Draufsicht auf die Verriegelungsvorrichtung in Richtung des Pfeiles III von Fig. 2 ,
- Fig. 4: eine Teilansicht der Trennplatte mit Verriegelungsvorrichtung in Richtung des Pfeiles IV von Fig. 2,
- Fig. 5: eine Fig. 2 entsprechende Teildarstellung der Trennkontaktanordnung mit Verriegelungsvorrichtung in einer Zwischenstellung zur Verlagerung der Trennplatte von der in Fig. 1 gezeigten AUS-Stellung in die Stellungen TEST oder EIN,
- Fig. 6: die Trennkontaktanordnung in einer Zwischenstellung, nachdem die Trennplatte in die Stellung EIN verlagert worden ist unmittelbar vor der Freigabe des Leistungsschalters,
- Fig. 7: die Trennkontaktanordnung in der EIN-Stellung des Leistungsschalters,
- Fig. 8: einen vergrößerten Teilschnitt durch eine mechanische Verriegelungseinrichtung gemäß Ausschnitt VIII von Fig. 1 in der AUS-Stellung von Trennplatte und Leistungsschalter beim Einschub des Leistungsschalters in den festen Anlagenteil und
- Fig. 9: die Verriegelungsvorrichtung von Fig. 1 und 8 mit Trennplatte und Leistungsschalter in der EIN-Stellung.

Bei den gezeigten Trennkontaktanordnungen 1 sind am Leistungsschalter 2 und an Stromschienen 13 im festen Anlagenteil 3 Kontaktelemente 4, 5 vorhanden, die durch Kontaktbrücken 6 leitend miteinander verbunden oder voneinander getrennt werden können, deren Kontaktstücke 7 an den Kontaktelementen 5, 4 sowohl des festen Anlagenteils 3 als auch des Leistungsschalters 2 unter Federkraft form- und kraftschlüssig angreifen.

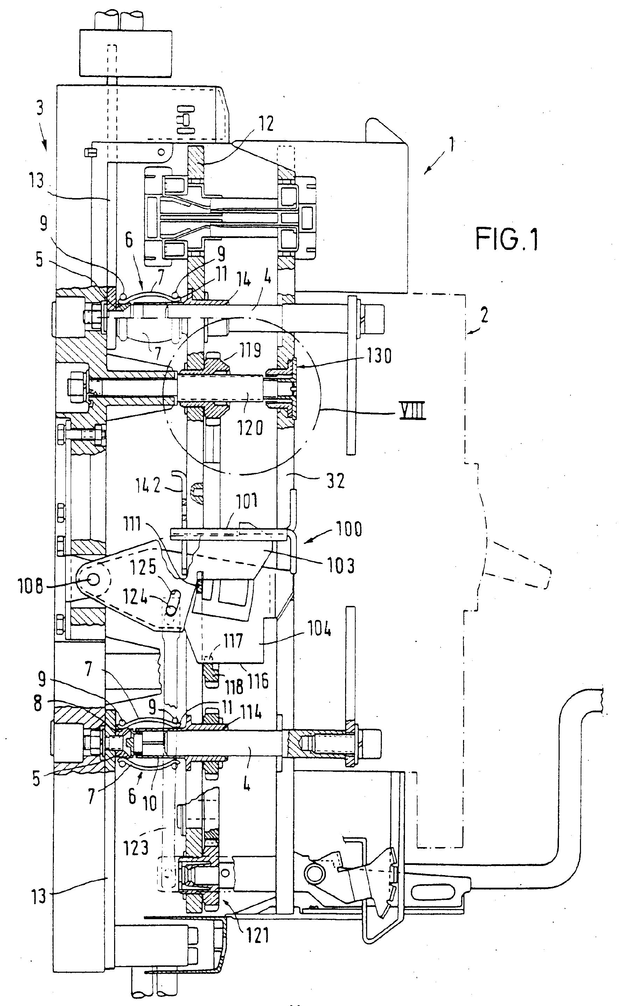

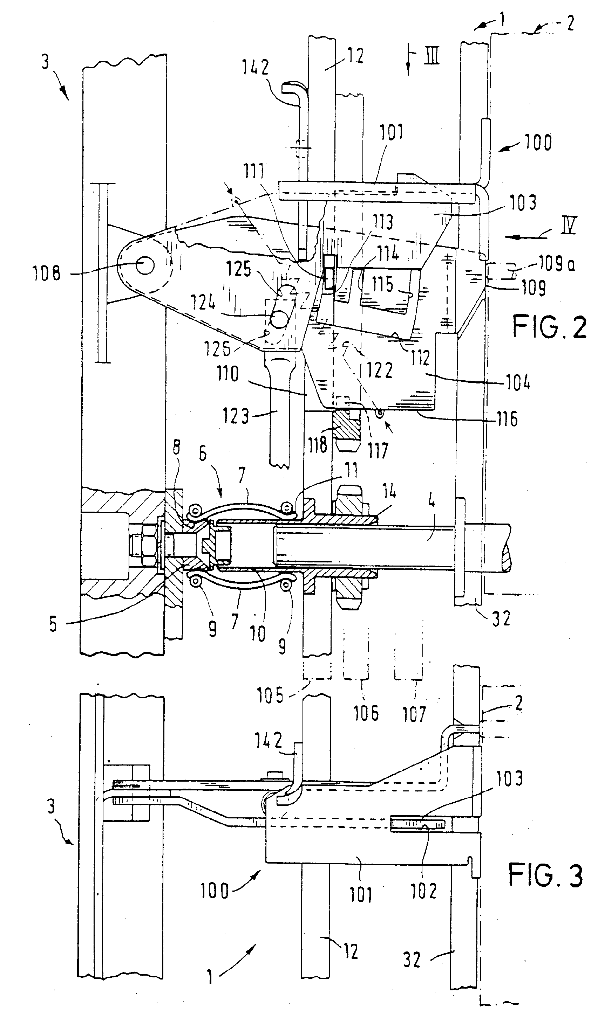

Wie in Fig. 1 und 2 im einzelnen zu erkennen ist, sind die Kontaktbrücken 6 bei dem gezeigten Ausführungsbeispiel zweckmäßig als Tulpenkontakte mit mehreren an den Kontaktelementen 5 des festen Anlagenteils 3 in einer Ringnut 8 oder einer ähnlich geformten Vertiefung unter der Spannung von Ringfedern 9 fest anliegenden Kontaktstücken 7 oder Kontaktsegmenten ausgebildet. Statt solcher Tulpenkontakte können auch anders ausgebildete Kontaktbrücken 6 verwendet werden, die mit entsprechenden Vorsprüngen oder Ausformungen in dafür vorgesehenen Vertiefungen an den betreffenden Kontaktelementen 4, 5 unter Federkraft formschlüssig gesichert sind.

Wie in Fig. 1 weiterhin zu erkennen ist, liegen die Kontaktstücke 7 der Kontaktbrücken 6 in der Trennstellung der Trennkontaktanordnung 1 mit ihrem dem Leistungsschalter 2 zugewandten Ende an Trennelementen 10 aus isolierendem Kunststoff an, in die die gegenüberliegenden Kontaktelemente 4 in der Einschubstellung des Leistungsschalters 2 so weit einfahrbar sind, daß sie sich im Bereich der durch die Trennelemente 10 auseinandergehaltenen Kontaktenden 11 der Kontaktbrücken 6 befinden.

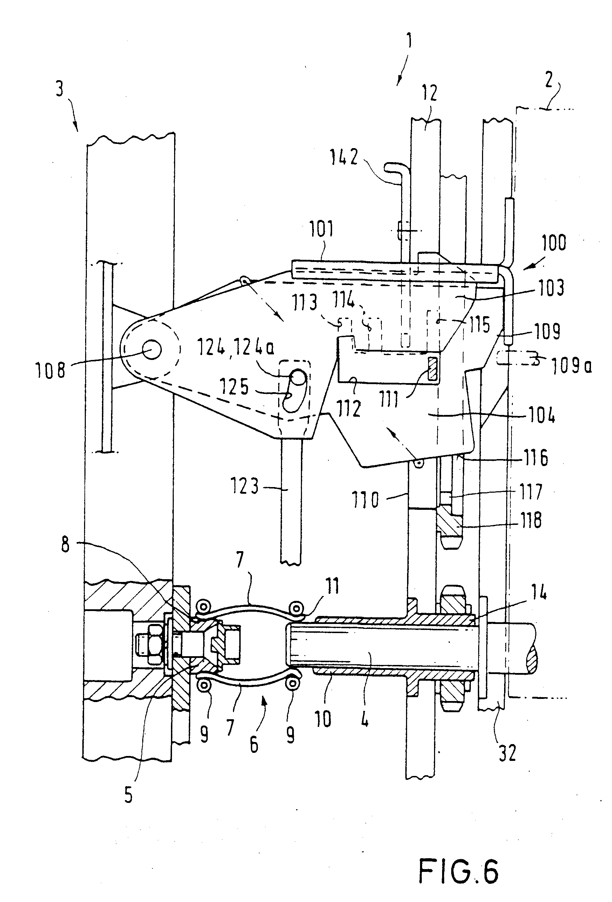

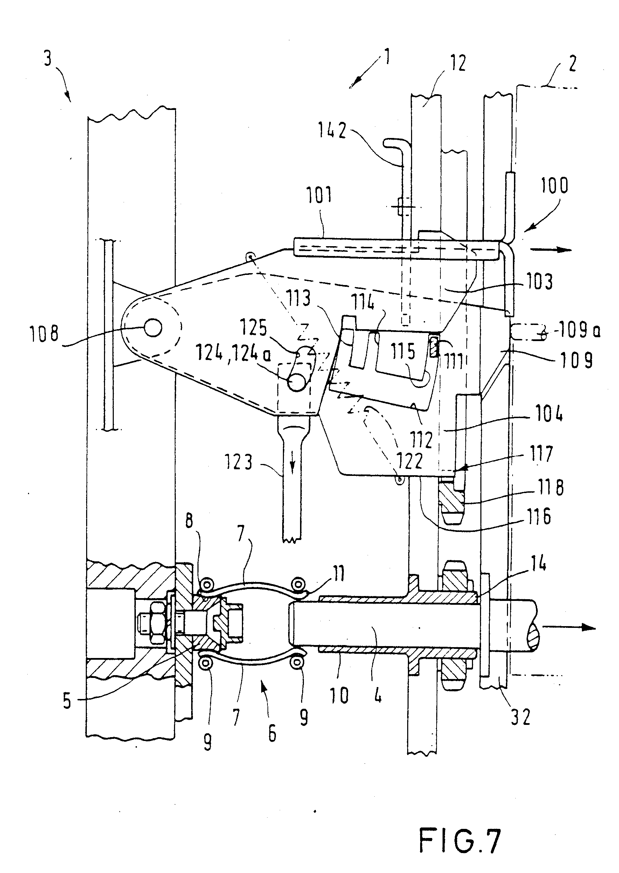

Nach dem Einschub des Leistungsschalters 2 sind die Trennelemente 10 auf den Kontaktelementen 4 von der in Fig. 1, 2 und 5 gezeigten Trennstellung in die in Fig. 6 und 7 gezeigte EIN-Stellung des Leistungsschalters 2 verschiebbar, wobei sie die vorher auseinandergehaltenen Kontaktenden 11 der Kontaktstücke 7 der Kontaktbrücken 6 freigeben, so daß diese auch an den eingeschobenen Kontaktelementen 4 des Leistungsschalters 2 in einen form- und kraftschlüssigen Kontakteingriff gelangen.

Die Trennelemente 10 sind Teile einer zwischen dem festen Anlagenteil 3 und dem eingeschobenen Leistungsschalter 2 verschiebbaren Trennplatte 12, die den Raum zwischen den Stromschienen 13 am festen Anlagenteil 3 und dem Leistungsschalter 2 vollständig abdeckt. Die Trennplatte 12 ist am festen Anlagenteil 3 verschiebbar gelagert, und die Kontaktelemente 4 des Leistungsschalters 2 sind beim Aufsetzen des Leistungsschalters 2 in die ihnen zugewandten offenen Enden 14 der Trennelemente 10 einführbar. Diese offenen Enden 14 der Trennelemente 10 stehen über die Ebene der Trennplatte 12 so weit vor, daß sie als Anschläge für die Trennplatte 12 an dem Leistungsschalter 2 in der in Fig. 6 und 7 gezeigten EIN-Stellung dienen.

Die Trennplatte 12 mit den Trennelementen 10 für die Kontaktstücke 7 der Kontaktbrücken 6 ist in Richtung auf die Kontaktbrücken 6 und von diesen weg derart verschiebbar angeordnet, daß die Trennelemente 10 mit der Trennplatte 12 zwischen die dem Leistungsschalter 2 zugewandten Enden der Kontaktstücke 7 ein- und ausfahrbar sind.

Um den Leistungsschalter 2 am festen Anlagenteil 3 zu sichern, ist eine Verriegelungsvorrichtung 100 vorgesehen, die den Leistungsschalter 2 einerseits am festen Anlagenteil 3 festlegt und andererseits zur Sicherung der Trennplatte 12 mit den daran angeordneten Trennelementen 10 in unterschiedlichen Abständen zwischen dem festen Anlagenteil 3 und dem eingeschobenen Leistungsschalter 2 sorgt.

Diese Verriegelungsvorrichtung 100 für den Leistungsschalter 2 besteht aus einem von der Rückseite oder der Tragplatte 32 des Leistungsschalters 2 hervorstehenden Haltebügel mit einer Eingriffsöffnung 102 für einen am festen Anlagenteil 3 schwenkbaren Haltehaken 103, der ebenso wie ein die Trennplatte 12 in den Stellungen AUS, TEST und EIN sichernder Sperrhebel 104 von der Außenseite der Trennplatte 12 und außerhalb des Leistungsschalters 2 her betätigbar ist. Die Stellungen AUS, TEST und EIN der Trennplatte 12 mit den Trennelementen 10 sind in Fig. 2 jeweils strichpunktiert mit den Bezugszeichen 105, 106 und 107 angedeutet.

Der Haltebügel 101 und der Haltehaken 103 ragen zusammen mit dem Sperrhebel 104 durch entsprechend gestaltete Öffnungen an der Trennplatte 12 von entgegengesetzten Seiten hindurch. Der Sperrhebel 104 ist dabei neben dem Haltehaken 103 am festen Anlagenteil 3 um eine zur Ebene der Trennplatte 12 parallele Achse 108 schwenkbar gelagert und steht mit seinem freien Ende 109 durch eine schlitzförmige Öffnung 110 in der Trennplatte 12 bis an die Rückseite des Leistungsschalters 2 hervor zur Betätigung eines Entklinkungsstiftes 109a an der Schalterrückseite.

Die schlitzförmige Öffnung 110 an der Trennplatte 12 ist mit einem Quersteg 111 für den Eingriff des Sperrhebels 104 versehen. Der Sperrhebel 104 ist als Kulissenhebel ausgebildet und besitzt eine fensterartige Längsöffnung 112 mit vorzugsweise drei davon etwa in der Ebene der Trennplatte 12 parallel zueinander zur Seite gerichteten Rastschlitzen 113, 114, 115, die in Längsrichtung des Sperrhebels 104 in einem solchen gegenseitigen Abstand nebeneinander angeordnet sind, daß der Sperrhebel 104 den Quersteg 111 an der Trennplatte 12 jeweils in den Stellungen AUS, TEST und EIN mit einem der parallelen Rastschlitze 113, 114, 115 sperrend übergreift und bei jeder Verstellung der Trennplatte 12 den Quersteg 111 in der die Rastschlitze 113, 114, 115 verbindenden Längsöffnung 112 frei entlanggleiten läßt.

Wie insbesondere in Fig. 1, 2 und 7 zu erkennen ist, greift der Sperrhebel 104 in jeder seiner Sperrstellungen mit einem außenliegenden Raststeg 116 in eine Innenverzahnung 117 an einem ihn umgebenden Zahnkranz 118 sperrend ein, der an der Trennplatte 12 drehbar gelagert ist und mit vorzugsweise vier Zahnrädern 119 kämmt, die ebenfalls an der Trennplatte 12 drehbar angeordnet sind und nach Art von Planetenrädern am Umfang des Zahnkranzes 118 angreifen. Jedes der Zahnräder 119 ist mit Innengewindegängen auf feststehenden Gewindebolzen 120, die vom festen Anlagenteil 3 hervorstehen, derart drehbar angeordnet, daß die Zahnräder 119 bei einem gemeinsamen synchronen Antrieb durch ein Zahnradgetriebe oder einen Zahnriementrieb 121 (Fig. 1) eine parallele Hin- und Herverstellung der Trennplatte 12 zwischen den Stellungen AUS, TEST und EIN bewirken.

Der Haltehaken 103 und der Sperrhebel 104 sind durch entgegengerichtete Federkräfte gegeneinander verspannt, indem sie durch eine an aneinander entgegengesetzten Außenseiten beider Teile 103, 104 angreifende und beide Teile gegeneinander ziehende Zugfeder 122 (Fig. 2) belastet sind.

Für eine getrennte Betätigung von Haltehaken 103 und Sperrhebel 104 ist ein gemeinsames Betätigungsgestänge 123 vorgesehen, das mit zwei koaxial zur Seite gerichteten Mitnahmezapfen 124, 124a in zueinander parallele, in Betätigungsrichtung beider Teile verlaufende, gegeneinander versetzte Langlöcher 125, 126 an dem Haltehaken 103 und an dem Sperrhebel 104 derart eingreift, daß bei verrastetem Haltehaken 103 durch das Betätigungsgestänge 123 nur der Sperrhebel 104 gegenüber dem Haltehaken 103 derart verschwenkbar ist, daß er mit seinen nebeneinanderliegenden Rastschlitzen 113, 114, 115 den Quersteg 111 an der Trennplatte 12 wahlweise in einer der Stellungen AUS, TEST und EIN übergreift oder den Quersteg 111 entlang der die Rastschlitze 113, 114, 115 verbindenden Längsöffnung 112 für eine Verstellung der Trennplatte 12 zwischen diesen Stellungen jeweils freigibt.

Um den Anbau und den Einschub des Leistungsschalters 2 an dem festen Anlagenteil 3 der Trennkontaktanordnung 1 zu erleichtern, sind zwischen dem Leistungsschalter 2 und dem festen Anlagenteil 3 außerdem mehrere mechanische Verriegelungselemente 130 vorhanden, die den Leistungsschalter 2 bereits in der Einschubstellung am festen Anlagenteil 3 sichern und beim Abbau des Leistungsschalters 2 erst nach Verlagerung der Trennplatte 12 in die Trennstellung der Kontaktbrücken 6 aus seiner Verriegelungsstellung wieder freigeben.

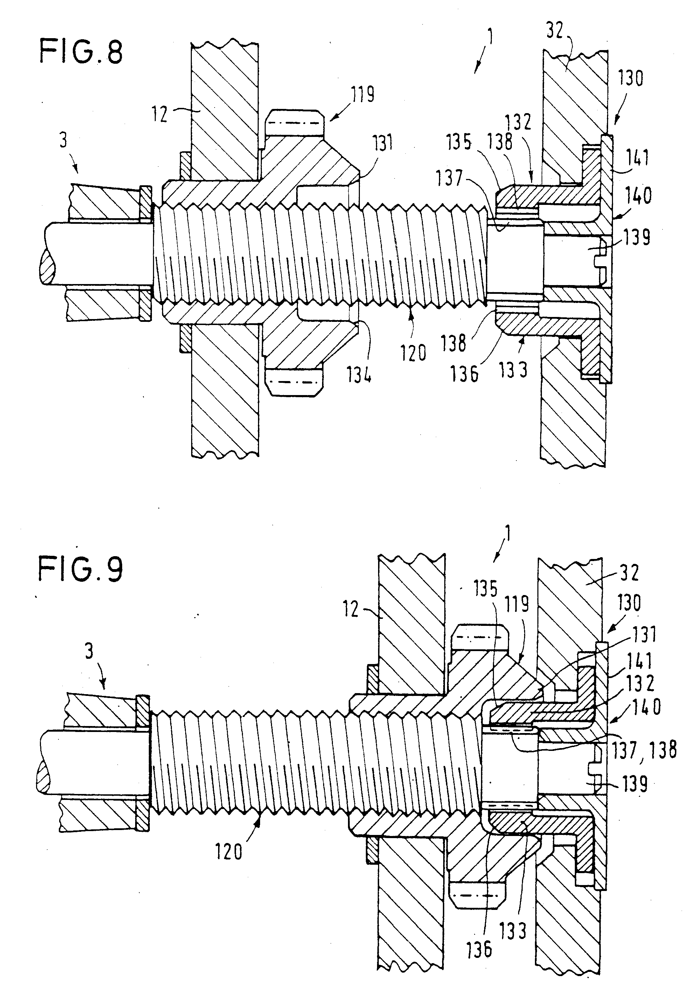

Hierfür weist entsprechend Fig. 1, 8 und 9 mindestens ein Teil der mit dem zentralen Zahnkranz 118 kämmenden Zahnräder 119 an der dem Leistungsschalter 2 zugewandten Stirnseite einen den zugehörigen anlagenfesten Gewindebolzen 120 mit radialem Abstand umgebenden ringförmigen Kragen 131 auf für einen Eingriff von an der Tragplatte 32 oder an der Rückseite des Leistungsschalters 2 jeweils paarweise nebeneinander angeordneten Klemmbacken 132, 133, die durch nicht gezeigte Spreizfedern auseinandergehalten sind und gegen die Trennplatte 12 so weit hervorstehen, daß sie in der Einschubstellung des Leistungsschalters 2 von dem Kragen 131 der zugehörigen Zahnräder 119 in Klemmeingriff am freien Ende des Gewindebolzens 120 zusammengedrückt werden, wie dies in Fig. 9 gezeigt ist.

Der Kragen 131 jedes Zahnrades 119 und/oder die zugehörigen Klemmbacken 132, 133 am Leistungsschalter 2 weisen jeweils stirnseitige konische Gleitflächen 134, 135, 136 auf, die die Klemmbacken 132, 133 beim Hineingleiten in den ringförmigen Kragen 131 des Zahnrades 119 radial zusammendrücken. Außerdem weisen der Gewindebolzen 120 und die Klemmbacken 132, 133 jeweils ineinandergreifende ringförmig profilierte Rastvertiefungen 137, 138 auf.

Das genaue Aufsetzen des Leistungsschalters 2 auf die Gewindebolzen 120 kann noch weiter dadurch verbessert werden, daß jeder Gewindebolzen 120 mit einem endseitigen Zentrierzapfen 139 ausgebildet ist, der in eine Zentrierhülse 140 zwischen den Klemmbacken 132, 138 formschlüssig eingreift, die die Klemmbacken 132, 133 mit einem radialen Halteflansch 141 übergreift und damit an der Tragplatte 32 oder an der Rückseite des Leistungsschalters 2 sichert.

Die Funktionsweise der Verriegelungsvorrichtung 100 für die Trennplatte 12 mit den daran angeordneten Trennelementen 10 in den Stellungen AUS, TEST und EIN mit den Bezugszeichen 105, 106 und 107 in Fig. 2 wird nachfolgend anhand von Fig. 2 bis 7 noch näher erläutert.

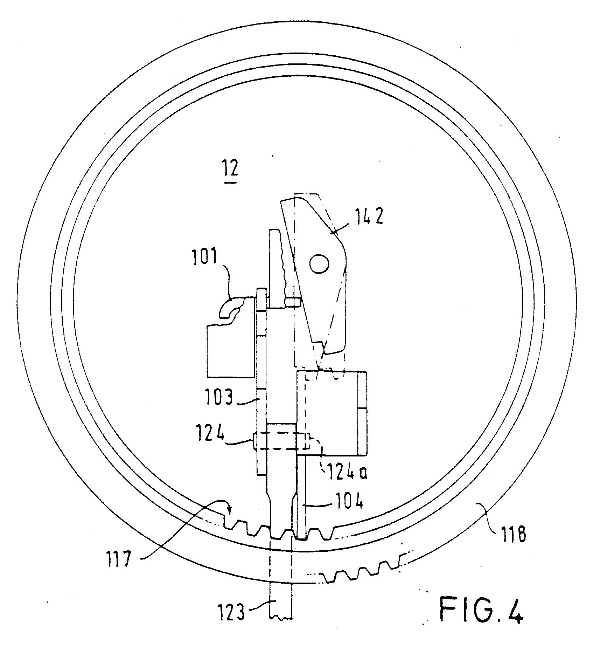

Beim Einschub des Leistungsschalters 2 befindet sich die Trennplatte 12 zunächst in der AUS-Stellung von Fig. 1 bis 3, wobei der Haltehaken 103 in die schlitzförmige Eingriffsöffnung 102 an dem Haltebügel 101 eingerastet ist. Der Haltebügel 101 hat dabei einen an der Rückseite der Tragplatte 12 schwenkbar angeordneten Verriegelungshebel 142 für den Sperrhebel 104 zur Seite geschwenkt (Fig. 4), so daß der Sperrhebel 104 durch das Betätigungsgestänge 123 gegenüber dem Haltehaken frei verschwenkt werden kann, ohne daß der Haltehaken 103 aus seiner Verriegelungsstellung an dem Haltebügel 101 gelöst wird.

Der Sperrhebel 104 befindet sich gemäß Fig. 1 und 2 zunächst in der AUS-Stellung der Trennplatte 12, in der der Quersteg 111 in den hinteren Rastschlitz 113 an dem Sperrhebel eingreift.

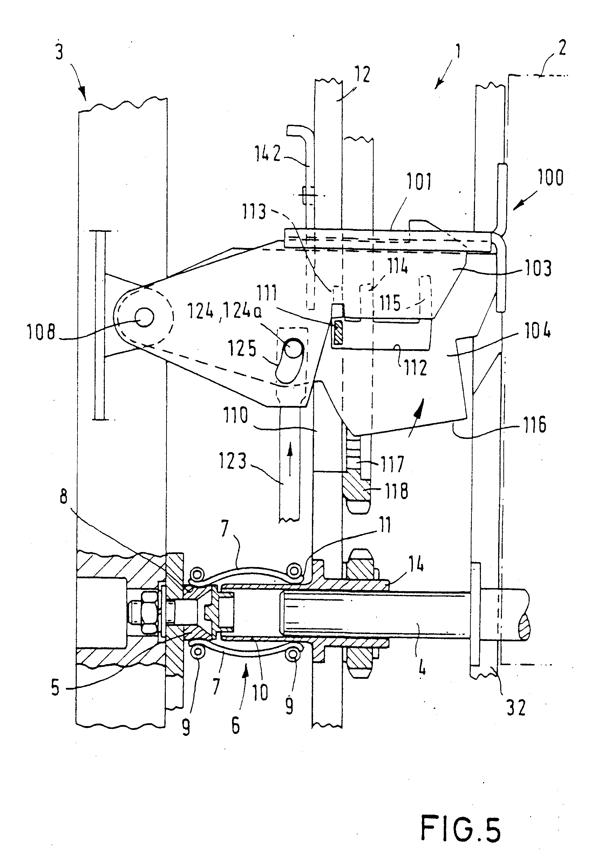

Um die Trennplatte 12 aus der AUS-Stellung von Fig. 1 und 2 in die Stellungen TEST oder EIN zu bringen, wird zunächst der Sperrhebel 104 durch das Betätigungsgestänge 123 entsprechend Fig. 5 so weit angehoben, daß der Quersteg 111 in den Bereich der Längsöffnung 112 an dem Sperrhebel 104 gelangt. In dieser Stellung kann die Trennplatte 12 mittels der dafür vorgesehenen Zahnräder 119 auf den Gewindebolzen 120 in Richtung auf den Leistungsschalter 2 so weit verstellt werden, bis sie sich in der TEST-Stellung 106 oder in der EIN-Stellung 107 von Fig. 6 in Verbindung mit Fig. 2 befindet, in der dann der Sperrhebel 104 mittels des Betätigungsgestänges 123 wieder nach unten gezogen werden kann, so daß der Quersteg 111, wie in Fig. 7 gezeigt ist, von dem am weitestens rechts liegenden Rastschlitz 115 des Sperrhebels aufgenommen und somit unverrückbar festgelegt wird.

Bei jeder der beschriebenen Zwischenstellungen des Sperrhebels wird dessen unterer Raststeg 116 aus der Innenverzahnung des Zahnkranzes 118 ausgehoben, so daß der Zahnkranz 118 zusammen mit den an seinem Außenumfang angreifenden Zahnrädern 119 gedreht werden kann, und zwar durch Betätigung des dafür vorgesehenen Zahnradgetriebes oder Zahnriementriebes 121.

## Patentansprüche

1. Trennkontaktanordnung für ein- und ausfahrbare Leistungsschalter in Schaltanlagen, wobei am Leistungsschalter (2) und an Stromschienen (13) im festen Anlagenteil Kontaktelemente (4, 5) und diese verbindende Kontaktbrücken (6) vorhanden sind, die an den Kontaktelementen (4, 5) unter Federkraft form- und kraftschlüssig angreifen, dadurch gekennzeichnet, daß zwischen dem Leistungsschalter (2) und dem festen Anlagenteil (3) eine Trennplatte (12) mit Trennelementen (10) aus islolierendem Kunststoff für die Kontaktbrücken (6) in Richtung auf die Kontaktbrücken (6) und von diesen weg derart verschiebbar angeordnet ist, daß die Trennelemente (10) aus isolierendem Kunststoff mit der Trennplatte (12) zwischen die dem Leistungsschalter (2) zugewandten Enden der Kontaktbrücken (6) ein- und ausfahrbar sind und daß die Kontaktelemente (4) des Leistungsschalters (2) in die dem Leistungsschalter (2) zugewandten offenen Enden der Trennelemente (10) aus isolierendem Kunststoff bis in die Endstellung einführbar sind.

2. Trennkontaktanordnung nach Anspruch 1, dadurch gekennzeichnet, daß eine Verriegelungsvorrichtung (100) einerseits für eine Festlegung des Leistungsschalters (2) am festen Anlagenteil (3) und andererseits für eine Sicherung der Trennplatte (12) mit Trennelementen (10) aus isolierendem Kunststoff in unterschiedlichen Abständen zwischen festem Anlagenteil (3) und eingeschobenem Leistungsschalter (2) vorgesehen ist.

3. Trennkontaktanordnung nach Anspruch 2, **dadurch gekennzeichnet**, daß die Verriegelungsvorrichtung (100) für den Leistungsschalter (2) aus einem von der Rückseite oder der Tragplatte (32) des Leistungsschalters (2) hervorstehenden Haltebügel (101) mit einer Eingriffsöffnung (102) für einen am festen Anlagenteil (3) schwenkbaren Haltehaken (103) besteht, der ebenso wie ein die Trennplatte (12) in den Stellungen AUS, TEST und EIN sichernder Sperrhebel (104) von der Außenseite der Trennplatte (12) und außerhalb des Leistungsschalters (2) her betätigbar ist.

4. Trennkontaktanordnung nach Anspruch 3, **dadurch gekennzeichnet**, daß der Haltebügel (101) und der Haltehaken (103) zusammen mit dem Sperrhebel (104) durch Öffnungen an der Trennplatte (12) von entgegengesetzten Seiten hindurchragen.

5. Trennkontaktanordnung nach Anspruch 3 bis 4, **dadurch gekennzeichnet**, daß der Sperrhebel (104) neben dem Haltehaken (103) am festen Anlagenteil (3) um eine zur Ebene der Trennplatte (12) parallele Achse (108) schwenkbar gelagert ist und mit seinem freien Ende (109) durch eine Önffnung (110) in der Trennplatte (12) bis an die Rückseite des Leistungsschalters (2) hervorsteht.

6. Trennkontaktanordnung nach Anspruch 5, **dadurch gekennzeichnet**, daß die Öffnung (110) an der Trennplatte (12) einen Quersteg (111) für den Eingriff des Sperrhebels (104) aufweist, und daß der Sperrhebel eine fensterartige Längsöffnung (112) mit vorzugsweise drei davon etwa parallel zur Ebene der Trennplatte (12) zur Seite gerichteten Rastschlitzen (113, 114, 115) besitzt, die in Längsrichtung des Sperrhebels (104) in einem solchen gegenseitigen Abstand nebeneinander angeordnet sind, daß der Sperrhebel (104) den Quersteg (111) an der Trennplatte (12) jeweils in den Stellungen AUS, TEST und EIN mit einem der parallelen Rastschlitze (113, 114, 115) sperrend übergreift und bei jeder Verstellung der Trennplatte (12) den Quersteg (111) in der die Rastschlitze (113, 114, 115) verbindenden Längsöffnung (112) frei entlanggleiten läßt.

7. Trennkontaktanordnung nach Anspruch 3 bis 6, **dadurch gekennzeichnet**, daß der Sperrhebel (104) in jeder seiner Sperrstellungen mit einem außenliegenden Raststeg (116) in eine Innenverzahnung (117) an einem ihn umgebenden Zahnkranz (118) sperrend eingreift, der an der Trennplatte (12) drehbar gelagert ist und mit ebenfalls an der Trennplatte (12) drehbar angeordneten Zahnrädern (119) kämmt, die nach Art von Planetenrädern an seinem Umfang angreifen und mit Innengewindegängen auf feststehenden Gewindebolzen (120) derart drehbar angeordnet sind, daß sie bei einem gemeinsamen synchronen Antrieb durch ein Zahnradgetriebe oder einen Zahnriementrieb (121) eine parallele Hin- und Herverstellung der Trennplatte (12) zwischen den Stellungen AUS, TEST und EIN bewirken.

8. Trennkontaktanordnung nach Anspruch 3 bis 7, **dadurch gekennzeichnet**, daß der Haltehaken (103) und der Sperrhebel (104) durch gegeneinandergerichtete Federkräfte zusammengehalten sind.

9. Trennkontaktanordnung nach Anspruch 8, **dadurch gekennzeichnet**, daß der Haltehaken (103) und der Sperrhebel (104) durch eine an einander entgegengesetzten Außenseiten beider Teile angreifende und beide Teile gegeneinander ziehende Zugfeder (122) belastet sind.

10. Trennkontaktanordnung nach einem der Ansprüche 6 bis 9, **dadurch gekennzeichnet**, daß für eine getrennte Betätigung von Haltehaken (103) und Sperrhebel (104) ein gemeinsames Betätigungsgestänge (123) vorgesehen ist, das mit zwei koaxial zur Seite gerichteten Mitnahmezapfen (124, 124a) in zueinander parallele, in Betätigungsrichtung beider Teile verlaufende, gegeneinander versetzte Langlöcher (125, 126) an dem Haltehaken (103) und an dem Sperrhebel (104) derart eingreift, daß bei verrastetem Haltehaken (103) durch das Betätigungsgestänge (123) nur der Sperrhebel (104) gegenüber dem Haltehaken (103) derart verschwenkbar ist, daß er mit seinen nebeneinanderliegenden Rastschlitzen (113, 114, 115) den Quersteg (111) an der Trennplatte (12) wahlweise in einer der Stellungen AUS, TEST und EIN übergreift oder den Quersteg (111) entlang der die Rastschlitze (113, 114, 115) verbindenden Längsöffnung (112) für eine Verstellung der Tragplatte (12) zwischen diesen Stellungen jeweils freigibt.

11. Trennkontaktanordnung nach Anspruch 7, **dadurch gekennzeichnet**, daß mindestens ein Teil der mit dem zentralen Zahnkranz (118) kämmenden Zahnräder (119) an der dem Leistungsschalter (2) zugewandten Stirnseite einen den zugehörigen anlagenfesten Gewindebolzen (120) mit radialem Abstand umgebenden ringförmigen Kragen (131) aufweist für einen Eingriff von an der Tragplatte (32) des Leistungsschalters (2) jeweils paarweise nebeneinander angeordneten Klemmbacken (132, 133), die durch Spreizfedern auseinandergehalten sind und gegen die Trennplatte (12) so weit hervorstehen, daß sie in der Einschubstellung des Leistungsschalters (2) von dem Kragen (131) der zugehörigen Zahnräder (119) in Klemmeingriff am freien Ende des Gewindebolzens (120) zusammengedrückt werden.

12. Trennkontaktanordnung nach Anspruch 11, **dadurch gekennzeichnet**, daß der Kragen (131) jedes Zahnrades (119) und/oder die zugehörigen Klemmbacken (132, 133) am Leistungsschalter (2) stirnseitige konische Gleitflächen (134, 135, 136) aufweisen, die die Klemmbacken (132, 133) beim Hineingleiten in den ringförmigen Kragen (131) des Zahnrades (119) radial zusammendrücken.

13. Trennkontaktanordnung nach Anspruch 11 oder 12, **dadurch gekennzeichnet**, daß der Gewindebolzen (120) und die Klemmbacken (132, 133) ineinandergreifende ringförmig profilierte Rastvertiefungen (137, 138) aufweisen.

14. Trennkontaktanordnung nach einem der Ansprüche 11 bis 13, **dadurch gekennzeichnet**, daß der Gewindebolzen (120) mit einen endseitigen Zentrierzapfen (139) in eine die zugehörigen Klemmbacken (132, 133) mit einem Halteflansch (141) übergreifende und an der Tragplatte (32) des Leistungsschalters (2) sichernde Zentrierhülse (140) formschlüssig eingreift.

## Claims

1. Break contact arrangement for power switches which can be engaged and disengaged in switching installations, the power switch (2) and the busbars (13) in the fixed installation part presenting contact elements (4, 5) and contact bridges (6), connecting the latter elements, which engage at the contact elements (4, 5) by positive and non-positive locking under spring action, wherein a separating plate (12) with separating elements (10) made of insulating synthetic material is arranged for the contact bridges (6) between the power switch (2) and the fixed part of the installation (3) and can be shifted in the direction of the contact bridges (6) and away from them in such a way that the separating elements (10) made of insulating synthetic material can be engaged and disengaged together with the separating plate (12) between the ends of the contact bridges (6), which are turned towards the power switch (2), and in such a way that the contact elements (4) of the power switch (2) can be introduced up to the final position into the open ends of the separating elements (10) made of insulating synthetic material and turned towards the power switch (2).

2. Break contact arrangement as claimed in claim 1, wherein a locking device (100) is provided in order to fix the power switch (2) at the fixed part of the installation (3) on the one hand and in order to secure the separating plate (12) with the separating elements (10) made of insulating synthetic material at different distances between the fixed part of the installation (3) and the inserted power switch (2) on the other hand.

3. Break contact arrangement as claimed in claim 2, **wherein** the locking device (100) for the power switch (2) consists of a holding shackle (101), which projects from the rear side or from the carrier plate (32) of power switch (2), which is provided with an engagement opening (102) for a holding hook (103) swivelling at the fixed part of the installation (3), and which can be operated from the outside of separating plate (12) and outside of power switch (2) in the same way as a blocking lever (104) which secures the separating plate (12) in the OFF, TEST, and ON positions.

4. Break contact arrangement as claimed in claim 3, **wherein** holding shackle (101) and holding hook (103) extend, together with blocking lever (104), from opposite sides through openings in the separating plate (12).

5. Break contact arrangement as claimed in claims 3 through 4, **wherein** the blocking lever (104) is supported by the side of the holding hook (103) at the fixed part of the installation (3) in such a way that it can swivel around an axis (108) running in parallel with regard to the plane of separating plate (12) and wherein its free end (109) extends up to the rear side of power switch (2) across an opening (110) in separating plate (12)

6. Break contact arrangement as claimed in claim 5, **wherein** the opening (110) in the separating plate (12) presents a cross web (111) allowing the engagement of blocking lever (104), and **wherein** the blocking lever (104) has a window-shaped longitudinal opening (112) with a preferable number of three engagement slots (113, 114, 115), which are directed from them towards the side approximately in parallel with regard to the plane of separating plate (12) and which are arranged side by side in the longitudinal direction of the blocking lever (104) and at such a distance from one another that the blocking lever (104) extends over the cross web (111) at the separating plate (12) by means of one of the parallel engagement slots (113, 114, 115) in a blocking way in every OFF, TEST, and ON position, and that it allows the free sliding of the cross web (111) within the longitudinal opening (112) connecting engagement slots (113, 114, 115) during every displacement of the separating plate (12).

7. Break contact arrangement as claimed in claims 3 through 6, **wherein** the blocking lever (104) uses a locking web (116) located on the outside in every of its blocking positions in order to engage in a blocking way into an internal toothing (117) at a toothed ring, which surrounds it, which is supported in a swivelling way by the separating plate (12) and which meshes with gears (119), that are also arranged in a swivelling way on separating plate (12), engage into the circumference of the toothed ring in the way of planet wheels and that are arranged with internal threads on fixed threaded bolts (120) swivelling in such a way that they bring about a displacement of the separating plate (12) in parallel and back and forth between the OFF, TEST, and ON positions by means of a common synchronous toothed gear or belt drive (121).

8. Break contact arrangement as claimed in claims 3 through 7, **wherein** the holding hook (103) and the blocking lever (104) are held together by means of antagonistic spring forces.

9. Break contact arrangement as claimed in claim 8, **wherein** the holding hook (103) and the blocking lever (104) are loaded by an extension spring (122) which acts upon opposite outside sections of both parts and which pulls both parts against one another.

10. Break contact arrangement as claimed in any claim 6 through 9, **wherein** a common operating mechanism (123) is provided for the separated operation of holding hook (103) and blocking lever (104), and uses two carrying pins (124, 124a) directed towards the side in a coaxial way in order to engage into slots (125, 126) which run in parallel with regard to one another in the direction of operation of both parts and which are offset with regard to one another at the holding hook (103) and at the blocking lever (104) in such a way that the operating mechanism (123) can only swivel the blocking lever (104) with regard to the holding hook (103) when the holding hook (103) is engaged in such a way that its engagement slots (113, 114, 115), which are located side by side, extend over the cross web (111) at the separating plate (12) in one of the optional OFF, TEST, and ON positions or liberates the cross web (111) prior to a displacement of the supporting plate (12) between each of these positions along the longitudinal opening (112) which connects the engagement slots (113, 114, 115).

11. Break contact arrangement as claimed in claim 7, **wherein** at least a part of the gears (119), meshing with the central tooth ring (118), present a ring-shaped collar (131), which is located at the front side turned towards the power switch (2) and surrounds the related threaded bolt (120) at a radial distance, the latter being fixed to the installation and allowing the engagement of the clamping jaws (132,133), which are arranged side by side in parallel pairs each on the supporting plate (32) of the power switch (2), held apart by means of bracing springs and project against the separating plate (12) up to such a distance that the collar (131) of the related gears (119) presses them together in a clamping engagement at the free end of the threaded bolt (120) in the inserted position of the power switch (2).

12. Break contact arrangement as claimed in claim 11, **wherein** the collar (131) of every gear (119) and/or the related clamping jaws (132, 133) present conical sliding surfaces (134, 135, 136) which are located at the front side and which radially compress the clamping jaws (132, 133) when they slide into the ringshaped collar (131) of gear (119).

13. Break contact arrangement as claimed in claim 11 or 12, **wherein** the threaded bolt (120) and the clamping jaws (132, 133) present engagement cavities (137, 138) which have a ring-shaped profile and engage into one another.

14. Break contact arrangement as claimed in any claim 11 through 13, **wherein** the threaded bolt (120) has a centring pin (139) which is located at its end side and which allows it to engage by positive locking into a centring sleeve (140), that extends over the related clamping jaws (132, 133) by means of an holding flange (141) and that is secured at the supporting plate (32) of the power switch (2).

## Revendications

1. Dispositif séparateur de contact pour disjoncteurs pour coupure en charge embrochables et débrochables dans des installations de distribution électrique, disposant d'éléments de contact (4, 5) reliés par des ponts de contact (6) sur le disjoncteur pour coupure en charge (2) et sur les barres conductrices (13) dans la partie fixe du dispositif; lesdits ponts de contact agissant par adhérence et à engagement positif sur les éléments de contact (4, 5) sous l'action d'un ressort; **caractérisé en ce qu'** est disposée entre le disjoncteur pour coupure en charge (2) et la partie fixe du dispositif (3) une plaquette de séparation (12) à éléments séparateurs (10) en matériau plastique isolant pour les ponts de contact (6), dirigée vers les ponts de contact (6), et de manière à coulisser en s'éloignant de ceux-ci, de telle sorte que les éléments séparateurs (10) en matériau plastique isolant soient embrochables et débrochables sur la plaquette de séparation (12) entre les extrémités des ponts de contact (6) dirigées vers le disjoncteur pour coupure en charge (2), et que les éléments de contact (4) du disjoncteur pour coupure en charge (2) soient introductibles jusqu'en position finale dans les extrémités ouvertes des éléments séparateurs (10) en matériau plastique isolant, dirigées vers le disjoncteur pour coupure en charge (2).

2. Dispositif séparateur de contact selon la revendication 1., **caractérisé en ce qu**'un dispositif de verrouillage (100) est prévu à différentes distances entre la partie fixe du dispositif (3) et le disjoncteur pour coupure en charge (2) embroché, afin d'assurer d'une part une fixation du disjoncteur pour coupure en charge (2) sur la partie fixe du dispositif (3), et d'autre part une protection de la plaquette de séparation (12) avec éléments séparateurs (10) en matériau plastique isolant.

3. Dispositif séparateur de contact selon la revendication 2., **caractérisé en ce que** le dispositif de verrouillage (100) pour le disjoncteur pour coupure en charge (2) consiste en une gâchette de retenue (101) en saillie depuis le fond ou la plaque d'appui (32) du disjoncteur pour coupure en charge (2), avec une ouverture de contact (102) pour un crochet de retenue (103) pivotant sur la partie fixe du dispositif (3); ledit crochet de retenue étant actionné depuis la face extérieure de la plaquette de séparation (12) et à l'extérieur du disjoncteur pour coupure en charge (2), ainsi qu'un levier d'arrêt (104) bloquant la plaquette de séparation (12) en positions OFF, TEST et ON.

4. Dispositif séparateur de contact selon la revendication 3, **caractérisé en ce que** la gâchette de retenue (101) et le crochet de retenue (103) ainsi que le levier d'arrêt (104), traversent la plaquette de séparation (12) par des ouvertures sur les côtés opposés.

5. Dispositif séparateur de contact selon la revendication 3, **caractérisé en ce que** le levier d'arrêt (104) est disposé, sur la partie fixe du dispositif (3), de manière à pouvoir pivoter sur un arbre (108) disposé parallèlement au plan de la plaquette de séparation (12), et à côté du crochet de retenue (103); et qu'il fasse saillie avec son extrémité libre (109) jusqu'au fond du disjoncteur pour coupure en charge (2), en passant au travers d'une ouverture (110) sur la plaquette de séparation (12).

6. Dispositif séparateur de contact selon la revendication 5, **caractérisé en ce que** l'ouverture (110) sur la plaquette de séparation (12) présente une barrette transversale (111) pour l'engagement du levier d'arrêt (104), et en ce que le levier d'arrêt possède une fenêtre longitudinale (112) disposant de trois fentes d'arrêt (113,114,115) sur un côté, de préférence parallèles au plan de la plaquette de séparation (12); lesdites fentes d'arrêt étant disposées sur la longueur du levier d'arrêt (104) l'une à côté de l'autre et avec un espacement tel que le levier d'arrêt (104) engage et bloque la barrette transversale (111) de la plaquette de séparation (12), dans l'une des fentes d'arrêt parallèles (113, 114, 115), correspondant à la position OFF, TEST ou ON; et de telle sorte que ledit levier d'arrêt fasse librement coulisser la barrette transversale (111) dans la fenêtre longitudinale (112) reliant les fentes d'arrêt (113, 114, 115), à chaque réglage de la plaquette de séparation (12).

7. Dispositif séparateur de contact selon les revendications 3 à 6, **caractérisé en ce que** le levier d'arrêt (104) s'engage et se bloque dans chacune de ses positions d'arrêt, avec une barrette d'arrêt (116) placée à l'extérieur sur la denture interne (117) d'une couronne dentée (118) qui l'entoure; ladite couronne dentée étant à mouvement rotatoire, disposée sur la plaquette de séparation (12), et engrenée sur des roues dentées (119) à mouvement rotatoire, disposées pareillement sur la plaquette de séparation (12); lesdites roues dentées agissant sur la circonférence de la couronne dentée à la manière de pignons satellites et étant dotées d'un pas de vis intérieur à mouvement rotatoire sur des boulons filetés fixes (120), de telle sorte qu'elles provoquent le déplacement alternatif et parallèle de la plaquette de séparation (12) entre les positions OFF, TEST et ON, en mouvement synchrone et combiné par transmission d'engrenages ou par transmission de courroie dentée (121).

8. Dispositif séparateur de contact selon les revendications 3 à 7, **caractérisé en ce que** le crochet de retenue (103) et le levier d'arrêt (104) sont maintenus solidaires par des forces élastiques à directions opposées.

9. Dispositif séparateur de contact selon la revendication 8, **caractérisé en ce que** le crochet de retenue (103) et le levier d'arrêt (104) sont lestés d'un ressort de traction (122) appliqué sur les faces externes opposées des deux pièces et exerçant sur celles-ci des forces élastiques opposées.

10. Dispositif séparateur de contact selon l'une des revendications 6 à 9, **caractérisé en ce qu**'un système combiné combiné decommande par tiges (123) est prévu pour une commande séparée du crochet de retenue (103) et du levier de commande (104), ledit système de commande par tiges ayant prise sur le crochet de retenue (103) et sur le levier d'arrêt (104) par deux tourillons d'entraînement (124, 124 a) insérés coaxialement de côté dans des trous longitudinaux (125, 126) parallèles et décalés l'un par rapport à l'autre, et disposés dans la direction de commande des deux pièces; de telle sorte que le crochet de retenue (103) étant enclenché par le système de commande par tiges (123), seul le levier d'arrêt (104) pivote en face du crochet de retenue (103), et de façon que par ses fentes d'arrêt disposées côte à côte, il engage la barrette transversale (111) de la plaquette de séparation (12) à volonté sur l'une des positions OFF, TEST et ON, ou qu'il libère la barrette transversale (111) dans l'ouverture longitudinale (112) reliant les fentes d'arrêt (113, 114, 115) pour un réglage correspondant de la plaquette de séparation (12) entre ces positions.

11. Dispositif séparateur de contact selon la revendication 7, **caractérisé en ce qu**'au moins une partie des roues dentées (119) s'engrenant avec la couronne dentée centrale (118) sur le côté frontal orienté vers le disjoncteur pour coupure en charge (2), présentent un rebord (131) en forme d'anneau entourant à écartement radial les boulons filetés fixes (120) associés, afin de saisir les mâchoires de serrage (132,133) disposées chaque fois par paires et côte à côte sur la plaque d'appui (32) du disjoncteur pour coupure en charge (2); lesdites mâchoires de serrage étant maintenues séparées par des ressorts écarteurs et faisant saillie loin vers la plaquette de séparation (12), si bien que, en position embrochée du disjoncteur pour coupure en charge (2), elles sont comprimées par les rebords (131) des roues dentées (119) associées, par saisie des mâchoires à l'extrémité libre du boulon fileté (120).

12. Dispositif séparateur de contact selon la revendication 11, **caractérisé en ce que** le rebord (131) de chaque roue dentée (119) et/ou les mâchoires de serrage (132, 133) associées présentent sur le disjoncteur pour coupure en charge (2) des surfaces de glissement (134, 135, 136) coniques et disposées frontalement, lesquelles compriment radialement les mâchoires de serrage (132, 133) lors du coulissement dans le rebord (131) en forme d'anneau de la roue dentée (119).

13. Dispositif séparateur de contact selon la revendication 11 ou 12, **caractérisé en ce que** le boulon fileté (120) et les mâchoires de serrage (132, 133) présentent des évidements d'arrêt (137, 138) profilés, en forme d'anneau et ayant prise l'un dans l'autre.

14. Dispositif séparateur de contact selon l'une des revendications 11 à 13, **caractérisé en ce que** le boutonfileté (120) s'engage positivement sur l'extrémité d'une goupille de centrage (139) dans une douille de centrage (140) protectrice disposée sur la plaque d'appui (32) du disjoncteur pour coupure en charge (2), ladite douille de centrage chevauchant les mâchoires de serrage (132, 133) associées par une bride de maintien (141).
